(19) Europäisches Patentamt

European Patent Office

Office européen des brevets

(11) **EP 1 734 709 A1**

(12) **EUROPEAN PATENT APPLICATION**
published in accordance with Art. 158(3) EPC

(43) Date of publication:
**20.12.2006 Bulletin 2006/51**

(51) Int Cl.:
***H04L 27/04*** *(2006.01)*

(21) Application number: **05719309.6**

(22) Date of filing: **18.02.2005**

(86) International application number:
**PCT/JP2005/002640**

(87) International publication number:
**WO 2005/099208 (20.10.2005 Gazette 2005/42)**

(84) Designated Contracting States:
**DE FR GB**

(30) Priority: **30.03.2004 JP 2004099237**

(71) Applicant: **SANYO ELECTRIC CO., LTD.
Moriguchi City, Osaka 570-8677 (JP)**

(72) Inventors:
• **NISHIMURA, Masaaki, Sanyo Electric Co., Ltd.
Moriguchi City, Osaka 570-8677 (JP)**

• **SUZUKI, Hirohisa, Sanyo Electric Co., Ltd.
Moriguchi City, Osaka 570-8677 (JP)**

(74) Representative: **Röss, Walter Josef Alfred
Winter, Brandl, Fürniss, Hübner,
Röss, Kaiser, Polte
Partnerschaft
Patent- und Rechtsanwaltskanzlei
Alois-Steinecker-Strasse 22
85354 Freising (DE)**

(54) **TRANSMISSION SIGNAL PRODUCING APPARATUS**

(57) To suppress a noise component caused in conversion of digital data into an ASK modulated signal to be transmitted over a network. Based on a clock CL generated by a clock generation circuit (10), an amplifier (12) produces a clock CL1 having a relatively small amplitude, and an amplifier (14) produces a clock CL2 having a relatively large amplitude. A switching control circuit (20) generates control signals SW relative to switch circuits (16), (18) based on digital data D. The switch circuits (16), (18) selectively send either the clock CL1 or CL2 to an LPF (22) according to the signals SW. The LPF (22) receives a signal which is obtained by connecting rectangular waves having different amplitudes. The LPF (22) smoothes the received signal to thereby produce an ASK modulated signal which is a succession of sinusoidal waveforms.

FIG. 1

**Description**

TECHNICAL FIELD

The present invention relates to a transmission signal producing apparatus for producing a transmission signal to be transmitted over a network, and in particular to an apparatus for producing a signal subjected to amplitude shift modulation.

BACKGROUND ART

A computer network, such as an office LAN (Local Area Network), for example, has become common. In particular, a network for connecting any devices other than a computer and its peripheral devices has currently been developed.

For example, as one standard (specification) of a vehicle-mounted network, a MOST (Media Oriented Systems Transport) system is available. In the MOST system, one ring-like network is established to which various devices including a car navigation system, a CD (a Compact Disc) player, a DVD (a Digital Versatile Disk) player, a speaker, a display, a telephone device, and so forth are connected. Then, digital data output from the CD player, for example, is utilized while being sent to the speaker via the network and converted into sound by the speaker before being output.

In the above-described situation, digital data can be transmitted among devices by means of any signals according to a variety of standards. For example, as a transmission method for transmitting a digital signal, there is available a broadband method, besides a baseband method for transmitting a digital signal intact, for transmitting an analogue signal which is obtained by modulating a carrier wave using a digital signal.

As one example of a modulation method for modulating a carrier wave, an Amplitude Shift Keying (ASK) method is known.

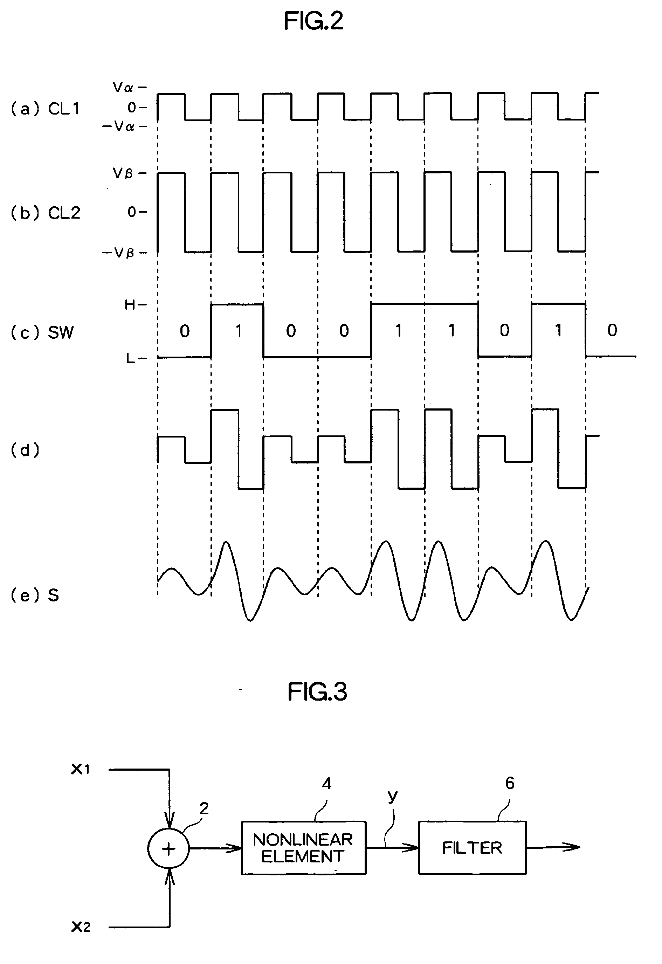

Fig. 3 shows a conventional ASK modulation circuit for producing a transmission signal subjected to ASK modulation, which is disclosed in non-patent document 1 described below. This circuit has an adder 2 for adding a carrier wave $x_1$ and an input signal $x_2$ and a nonlinear element 4 having conversion characteristics $y=f(x)k$, for converting an output $x$ from the adder 2. An output from the nonlinear element 4 is output through the filter 6.

The characteristics $y$ of the non-linear element 4 can be expanded into power series as shown below.

$$y=a_0+a_1 \cdot x+a_2 \cdot x^2+a_3 \cdot x^3+\ldots$$

$$a_n=(n!)^{-1}(\partial f / \partial x)|_{x=0}$$

wherein $x=x_1+x_2$.

When $x_1=v_1 \cdot \cos\omega t$, $x_2=v(t)$ is held,

$$y=[a_0+2a_2 v(t)]\cos\omega t$$

$$+[a_0+0.5a_2 v_1^2+a_1 v(t)+a_2 v^2(t)+\ldots]$$

$$+0.5a_2 v_1^2 \cos 2\omega t+\ldots$$

is obtained.

Here, the first term on the right side of the expression represents an ASK modulated signal component, and the second and thereafter terms on the right side cause addition of a modulation distortion component. The filter 6 is a band filter for reducing the modulation distortion component.

Non-Patent Document 1

"Electronic Information Communication Handbook" edited by The Institute of Electronics, Information and Communication Engineers, published by Ohmsha, the first version, the first fascicle, page 253

DISCLOSURE OF THE INVENTION

Problems to be Solved by the Invention

As described above, the conventional circuit has a filter 6 for the purpose of removing the distortion caused in conversion carried out by the non-linear element 4. However, the filter 6 is not capable of thoroughly removing the distortion, and therefore a problem is caused such that residual distortion may cause a noise component.

The present invention has been conceived in order to solve this problem, and aims to provide a transmission signal producing apparatus for producing an ASK modulated signal with a noise component reduced.

Means for Solving the Problem

According to the present invention, there is provided a transmission signal producing apparatus comprising a first signal generation circuit for outputting a first signal having a first amplitude according to a bit value "0" of the digital data and cyclically changing at a frequency in synchronism with a bit rate of the digital data, a second signal generation circuit for outputting a second signal having a second amplitude according to a bit value "1" of the digital data and cyclically changing at a frequency in synchronism with the bit rate of the digital data, and an output circuit for producing the transmission signal based on the first signal and the second signal, wherein the output circuit includes a selection circuit for selectively outputting either the first signal or the second signal according to the bit value of the digital data.

According to another aspect of the present invention, there is provided a transmission signal producing apparatus, wherein the first signal generation circuit successively outputs the first signals, the second signal generation circuit successively outputs the second signals, and the selection circuit is a switch circuit for selectively connecting and disconnecting output ends of the first signal generation circuit and the second signal generation circuit.

According to a preferred aspect of the present invention, the first signal generation circuit and the second signal generation circuit may generate sinusoidal waveforms which are in synchronism with each other, and the output circuit may output an output signal from the selection circuit as the transmission signal.

According to another preferred aspect of the present invention, the first signal generation circuit and the second signal generation circuit may be clock generation circuits which generate rectangular waveform signals which are in synchronism with each other, and the output circuit may have a low pass filter into which an output signal of the selection circuit is input, and output an output signal from the low pass filter as the transmission signal.

EFFECT OF THE INVENTION

According to the present invention, when two signal generation circuits for generating signals having different amplitudes from each other are provided, and output signals from these circuits are connected to each other while selecting either one of these output signals according to the bit value of the digital data, a transmission signal subjected to amplitude shift modulation is produced. With the above, a noise component due to the processing for attaining transmission signals having different amplitudes can be suppressed.

BRIEF DESCRIPTION OF THE DRAWINGS

Fig. 1 is a block diagram showing a schematic structure of a transmission signal producing apparatus according to the present invention;
Fig. 2 is a timing chart for signals relative to the respective sections of this apparatus; and
Fig. 3 is a structural diagram showing the principle employed by a conventional ASK modulation circuit.

BEST MODE FOR CARRYING OUT THE INVENTION

In the following, an embodiment of the present invention (hereinafter referred to as an embodiment) will be described based on the accompanied drawings.

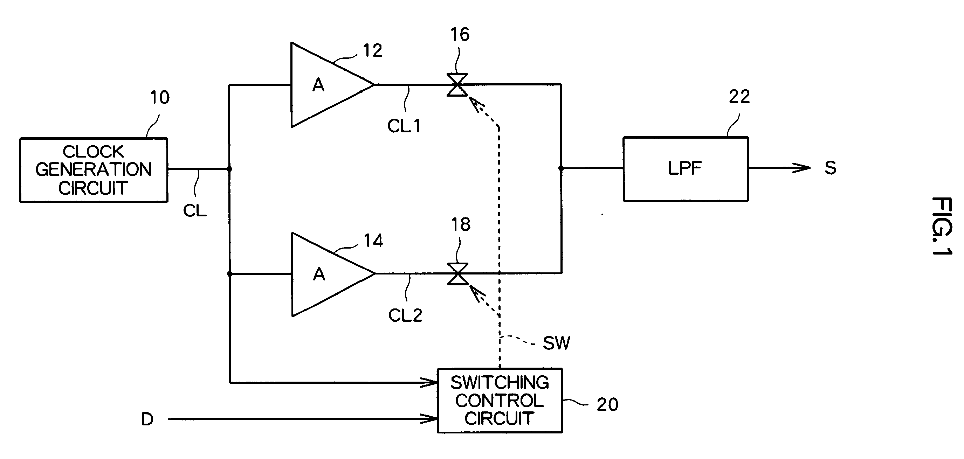

Fig. 1 is a block diagram showing a schematic structure of a transmission signal producing apparatus according to the present invention. This apparatus is constructed comprising a clock generation circuit 10, amplifiers 12, 14, switch circuits 16, 18, a switching control circuit 20, and a low pass filter (LPF) 22. This apparatus receives serial digital transmission data D, produces an amplitude shift modulated signal having an amplitude which shifts according to the variation over time of the bit value of the data D, and outputs the produced amplitude shift modulated signal as a transmission signal S to a network.

The clock generation circuit 10 generates a clock CL having a frequency which is in synchronism with the bit rate of the transmission data D. That is, supposing that the bit rate of the transmission data D is defined as r (unit bps), the frequency of a clock CL is defined as nr [Hz] (n being a natural number). Here, it is assumed that n=1.

The amplifiers 12, 14, each having received a clock CL having a rectangular waveform, shift the amplitudes of the clocks CL. Specifically, the amplifiers 12, 14 produce rectangular waves CL1, CL2, respectively, each swinging upwards and downwards relative to the voltage 0 defined as the middle. It is arranged such that the clocks CL1, CL2 output by the amplitudes 12, 14, respectively, have different amplitudes.

The switching control circuit 20 receives transmission data D, and generates control signals for the switch circuits 16, 18 based on the bit value of the data. Specifically, the switching control circuit 20 latches a voltage signal input as data D, in synchronism with a clock CL, and generates a control signal based on the latched voltage.

With this arrangement, control signals SW for controlling the ON/OFF states of the switch circuits 16, 18, respectively in synchronism with the clocks CL1, CL2, are produced. For example, a control signal SW may be a logical signal expressed by the voltage at the H/L level.

The ON/OFF states of the switch circuits 16, 18 are switched according to a control signal SW output from the switching control circuit 20. For example, the switch circuits 16, 18 are constructed using MOS type field-effect transistors (MOSFETs). Specifically, the channels (parts between the sources and drains) of the MOSFETs are connected between the amplifier 12, 14 and the LPF 22 to apply a voltage to the gate according to the control signal SW to thereby switch the ON state (conduction state) and the OFF state (non-conductive state) of the channel.

For example, when a control signal SW remains at a H level, the switch circuit 16 remains in an OFF state and the switch circuit 18 remains in an ON state. On the other hand, when a control signal SW remains at a L level, the switch circuit 16 remains in an ON state and the switch circuit 18 remains in an OFF state.

The LPF 22 lets a component in a predetermined low frequency band defined according to the cut-off frequency thereof pass through. That is, the LPF 22 removes a high frequency component contained in the clocks CL1, CL2, to thereby reform these clocks so as to have a smooth sinusoidal waveform.

Fig. 2 is a timing chart for the signals relative to the respective sections of this apparatus. Operation of this apparatus will be described with reference to this drawing.

The clock generation circuit 10 successively produces clocks CL, and accordingly, the amplifiers 12, 14 successively produce clocks CL1, CL2, respectively. The signal waveforms (a), (b) shown in Fig. 2 represent the waveforms of the clocks CL1, CL2, respectively. Specifically, the amplifier 12 outputs a clock CL1 having the H (High) level at $V\alpha$ and the L(Low) level at $-V\alpha$. On the other hand, the amplifier 14 produces a clock CL2 having the H level at $V\beta$ and the L level at $-V\beta$. Here, the amplifiers 12, 14 are constructed so as to hold $V\alpha < V\beta$.

As described above, the amplifiers 12, 14 successively output the clocks CL1, CL2, respectively, which are in synchronism with each other and have different amplitudes from each other.

The signal waveform (c) shown in Fig. 2 represents a control signal SW to be output when the switching control circuit 20 receives a bit sequence "010011010" as data D, for example. Specifically, the switching control circuit 20 outputs as a control signal SW a L level in the case of the bit value "0" of the data D and a H level in the case of the bit value "1" of the data D. The control signal SW is in synchronism with the clocks CL1 and CL2.

When the control signal SW remains at L level, only the switch circuit 18 of the two switch circuits remains in the ON state so that a clock CL2 proceeds to the LPF 22. On the other hand, when the control signal SW remains at a H level, only the switch circuit 16 remains in the ON state so that a clock CL 1 proceeds to the LPF 22.

As a result, a signal such as is shown by the signal waveform (d) in Fig. 2, which is obtained by sequentially connecting the clocks CL1 and CL2 which are selected according to the bit pattern of the data D, is input to the LPF 22.

This input signal is smoothed by the LPF 22, and as a result a transmission signal S, or an ASK modulated signal, having a signal waveform (e) shown in Fig. 2, is produced. That is, the transmission signal S is obtained by connecting in a smoothed manner the sinusoidal waveforms having different amplitudes.

It should be noted that, in the above-described apparatus, rectangular waves CL1, CL2 having different amplitudes are connected to each other, and a resultant signal is smoothed by the LPF 22 to generate an ASK modulated signal.

Alternatively, two circuits for generating sinusoidal signals may be provided for generating two types of sinusoidal waveforms in synchronism with each other and having different amplitudes from each other. With this arrangement, the LPF 22 can be eliminated. In this case, in place of the clock generation circuit 10, a sinusoidal signal source may be provided, and an output from the source may be amplified by the amplifiers 12, 14 using different gains. With this arrangement, two types of sinusoidal signals in synchronism with each other and having different amplitudes from each other can be obtained.

As described above, when successively output signals are switched by means of the switch circuit, the junction between the waveforms is smoothed, and noise generation is thereby suppressed.

Also, although the above-described apparatus has a structure for selectively outputting successively generated waveforms having different amplitudes, the apparatus may have an alternative structure in which one circuit for outputting a waveform having a certain amplitude during one cycle when the bit value of the data D is "1" and another circuit for outputting a waveform having another amplitude during one cycle when the bit value of the data D is "0" are provided, and outputs from these circuits are connected to each other to form a transmission signal S.

INDUSTRIAL APPLICABILITY

By providing two signal generation circuits for generating signals having different amplitudes from each other, and connecting the output signals from these circuits to each other while selecting either one of these output signals according to the bit value of the digital data, a transmission signal producing apparatus capable of generating an ASK modulated signal with a noise component suppressed can be obtained.

**Claims**

1. A transmission signal producing apparatus for producing a signal subjected to amplitude shift modulation according to digital data, as a transmission signal for use in transmission of the digital data between node devices connected to a network, comprising:

   a first signal generation circuit for outputting a first signal having a first amplitude according to a bit value "0" of the digital data and cyclically changing at a frequency in synchronism with a bit rate of the digital data;
   a second signal generation circuit for outputting a second signal having a second amplitude according to a bit value "1" of the digital data and cyclically changing at a frequency in synchronism with the bit rate of the digital data; and
   an output circuit for producing the transmission signal based on the first signal and the second signal,

   wherein
   the output circuit includes a selection circuit for selectively outputting either the first signal or the second signal according to the bit value of the digital data.

2. The transmission signal producing apparatus according to claim 1, wherein
   the first signal generation circuit successively outputs the first signals,
   the second signal generation circuit successively outputs the second signals, and
   the selection circuit is a switch circuit for selectively connecting and disconnecting output ends of the first signal generation circuit and the second signal generation circuit.

3. The transmission signal producing apparatus according to claim 1, wherein
   the first signal generation circuit and the second signal generation circuit generate sinusoidal waveforms which are in synchronism with each other, and
   the output circuit outputs an output signal from the selection circuit as the transmission signal.

4. The transmission signal producing apparatus according to claim 1, wherein
   the first signal generation circuit and the second signal generation circuit are clock generation circuits which generate rectangular waveform signals which are in synchronism with each other, and
   the output circuit has a low pass filter into which an output signal of the selection circuit is input, and outputs an output signal from the low pass filter as the transmission signal.

# FIG. 1

# FIG.2

(a) CL1

(b) CL2

(c) SW 0 1 0 0 1 1 0 1 0

(d)

(e) S

# FIG.3

## INTERNATIONAL SEARCH REPORT

| | International application No. |
|---|---|
| | PCT/JP2005/002640 |

| A. CLASSIFICATION OF SUBJECT MATTER |
|---|
| Int.Cl⁷ H04L27/04 |

According to International Patent Classification (IPC) or to both national classification and IPC

| B. FIELDS SEARCHED |
|---|
| Minimum documentation searched (classification system followed by classification symbols) |
| Int.Cl⁷ H04L27/04 |

Documentation searched other than minimum documentation to the extent that such documents are included in the fields searched

| Jitsuyo Shinan Koho | 1926-1996 | Toroku Jitsuyo Shinan Koho | 1994-2005 |
|---|---|---|---|
| Kokai Jitsuyo Shinan Koho | 1971-2005 | Jitsuyo Shinan Toroku Koho | 1996-2005 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y | JP 2003-115883 A (Hitachi Kokusai Electric Inc.),<br>18 April, 2003 (18.04.03),<br>Par. Nos. [0015], [0017], [0019] to [0023], [0033] to [0034]; Figs. 1, 4<br>(Family: none) | 1-3<br>4 |
| Y | JP 61-264845 A (Fuji Facom Corp.),<br>22 November, 1986 (22.11.86),<br>Page 1, right column, line 9 to page 2, upper left column, line 12; Fig. 3<br>(Family: none) | 4 |

| ☐ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 April, 2005 (05.04.05) | 19 April, 2005 (19.04.05) |

| Name and mailing address of the ISA/<br>Japanese Patent Office | Authorized officer |
|---|---|
| Facsimile No. | Telephone No. |

Form PCT/ISA/210 (second sheet) (January 2004)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Electronic Information Communication Handbook. Information and Communication Engineers. Ohm-sha, 253